# EUROPÄISCHE PATENTSCHRIFT

(11) **EP 0 849 825 B1**
(45) Veröffentlichungstag und Bekanntmachung des Hinweises auf die Patenterteilung: **16.02.2005**
(21) Anmeldenummer: 97121709.6
(22) Anmeldetag: 10.12.1997
(51) Int. Cl.: H01Q 15/08, H01Q 19/06, H01Q 23/00, H01Q 1/32, G01S 13/93

(54) **Antennenanordnung, insbesondere für Kraftfahrzeuge**
Antenna arrangement, in particular for motor vehicles
Agencement d'antenne, en particulier pour véhicules automobiles

(30) Priorität: 19.12.1996 DE 19652973
(43) Veröffentlichungstag der Anmeldung: 24.06.1998
(73) Patentinhaber: DaimlerChrysler AG, 70567 Stuttgart (DE)
(72) Erfinder: Schneider, Robert, 89233 Neu-Ulm (DE)

(56) Entgegenhaltungen:
- DE-A- 3 218 237
- US-A- 2 814 040
- R.C. HANSEN: "Microwave Scanning Antennas, Volume I, Apertures" 1964 , ACADEMIC PRESS , NEW YORK XP002122720 * Seite 224 - Seite 233; Abbildungen 12-14 *
- PATENT ABSTRACTS OF JAPAN vol. 007, no. 233 (E-204), 15. Oktober 1983 (1983-10-15) & JP 58 123207 A (BOEICHO GIJUTSU KENKYU HONBU;OTHERS: 0J), 22. Juli 1983 (1983-07-22)

## Beschreibung

Die Erfindung betrifft eine Antennenanordnung, insbesondere für Kraftfahrzeuge, nach dem Oberbegriff des Patentanspruchs 1.

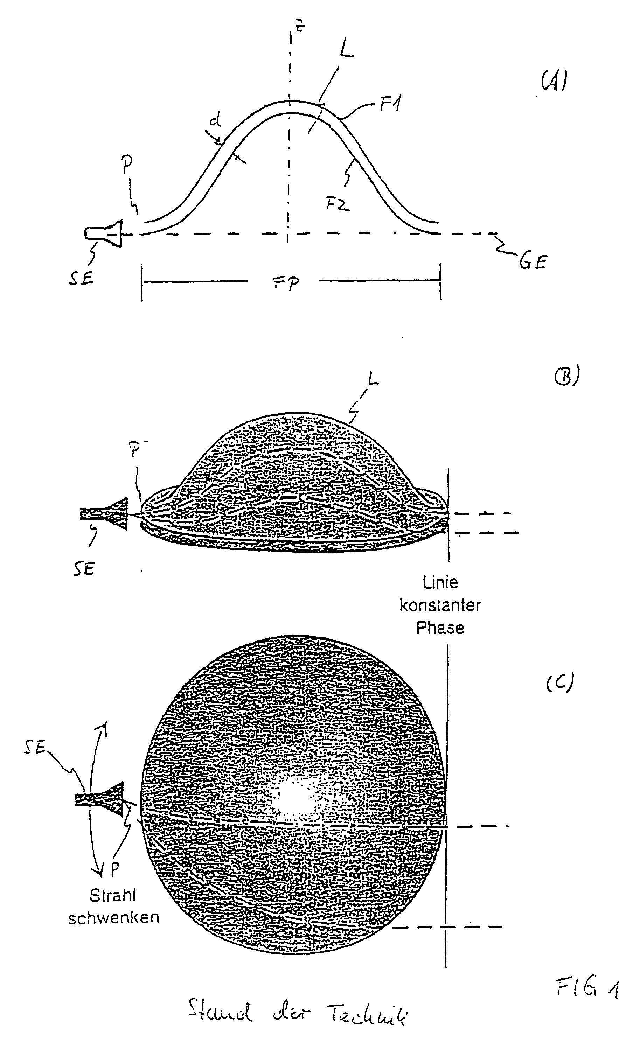

Antennen mit zwei in geringem Abstand parallel verlaufenden gekrümmten Flächen sind beispielsweise mit dem in FIG. 1 skizzierten Aufbau als sogenannte geodätische Luneberg-Linsen bekannt. Die Form der Flächen F1, F2 ist so, daß ein von einem Strahlerelement SE an einer Randposition P eingespeistes Hochfrequenzsignal nach der Antenne eine Wellenfront mit einer im wesentlichen geraden Linie konstanter Phase bildet. Durch Verschieben des Strahlerelements SE entlang der Flächenränder oder durch mehrere fest angeordnete Strahlerelemente können unterschiedliche Hauptstrahlrichtungen der Antennenanordnung realisiert werden.

An Kraftfahrzeug-Radaranordnungen werden die besonderen Anforderungen kostengünstiger Herstellung und geringen Platzbedarfs beim Einbau gestellt.

Eine Antennenanordnung, welche zwei in geringem Abstand parallel verlaufende gekrümmte leitende Flächen als strahlungsbündelndes Element aufweist, wird von R.C. Johnson beschrieben (R.C. Hansen: "Microwave Scanning Antennas, Vol. I, Apertures", 1964, Academic Press, New York). Dabei wölben sich die leitenden Flächen von deren Rändern her von einer Grundebene weg, wobei sie sich im weiteren Verlauf zur Mitte der Flächen hin wieder zu der Grundfläche hinwölben. Eine solche Antennenanordnung lässt sich mit im Vergleich zu bekannten Lüneburg-Linsen geringerem Platzbedarf realisieren

Aufgabe der Erfindung ist es, eine Antennenanordnung, insbesondere für Kraftfahrzeuge, anzugeben, welche in einer weiteren Redzierung des Platzbedarf für deren Einbau resultiert.

Die Erfindung ist im Patentanspruch 1 beschrieben. Die Unteransprüche enthalten vorteilhafte Ausgestaltungen und Weiterbildungen der Erfindung. Kraftfahrzeug-Radaranordnungen zur Überwachung eines in Fahrtrichtung liegenden Überwachungsbereiches weisen typischerweise mehrere Antennenelemente und ein oder mehrere strahlungsbündelnde Elemente auf.

Die Erfindung erlaubt die Verwendung des an sich bekannten und günstigen Bauprinzips der geordätischen Luneberglinse bei gegenüber der üblichen Bauform deutlich reduziertem Platzbedarf. Die Erfindung macht sich für den Einsatz der Radaranordnung in einem Kraftfahrzeug vorteilhaft zunutze, dass eine Vertikalauflösung von Zielrichtungen nicht zwingend ist und eine Horizontalauflösung mit dem erfindungsgemäßen Antennentyp einfach und vorteilhaft möglich ist.

Die Erfindung ist nachfolgend anhand von Beispielen unter Bezugnahme auf die Abbildungen noch eingehend veranschaulicht. Dabei zeigt
- FIG. 1: eine Anordnung nach dem Stand der Technik
- FIG. 2: eine Ausführungsform der Erfindung

In FIG. 1 ist der prinzipielle Aufbau einer sogenannten geodätischen Luneberglinse skizziert, welche aus zwei sich in geringem Abstand d gegenüberliegend parallel verlaufenden elektrisch leitenden Flächen F1 und F2 gebildet ist (Querschnittsskizze in FIG. 1 (A)). Die Krümmung der Flächen ist derart gewählt, daß für ein an einer Randposition P über ein Strahlerelement SE eingespeistes Hochfrequenzsignal auf allen Ausbreitungswegen (Schrägansicht (B) und Draufsicht (D)) zwischen den beiden Flächen solche Laufzeiten aufweist, daß im Freiraum nach dem Austritt aus der Linse ein Wellenfeld mit einer im wesentlichen geraden Linie konstanter Phase in der Ebene der Austrittsrandöffungen der beiden Flächen entsteht.

Üblicherweise ist die Linse der beschriebenen Art rotationssymmetrisch bezüglich einer Mittelachse Z, und die Randöffnung der beiden leitenden Flächen F1 und F2 verläuft parallel zu einer Grundebene GE. Die Projektion der Linse L auf die Grundebene ergibt eine kreisförmige Projektionsfläche. Die Krümmung der Flächen ist so, daß von den Rändern der Projektionsfläche zu deren Mitte (Achse Z) hin die leitenden Flächen sich monoton weiter von der Projektionsfläche wegwölben.

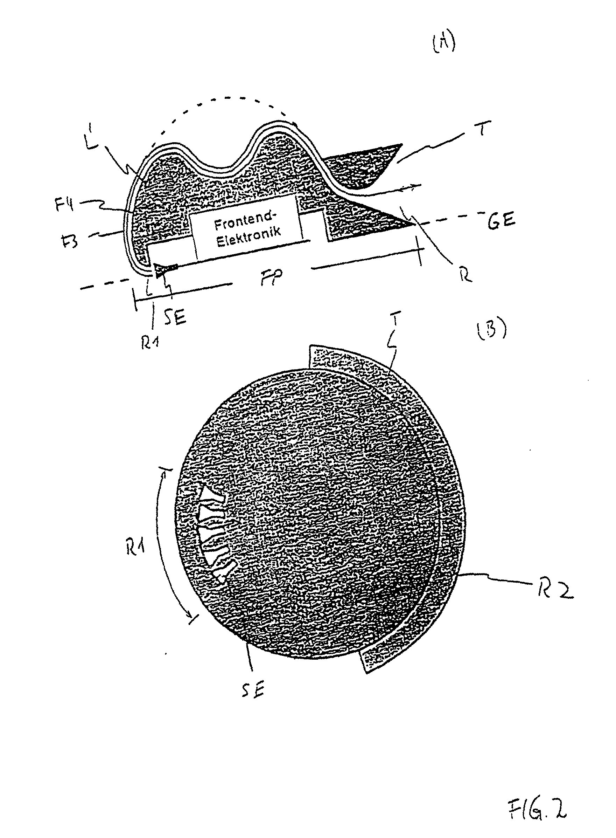

Bei der Erfindung ist wesentlich, daß an die Stelle der zur Mitte hin monotonen Wölbung die Ausformung der leitenden Flächen F3, F4 so gewählt ist, daß diese vom Rand der Projektionsfläche FF zur Mitte hin sich anfänglich von der Grundebene GE wegwölben um dann aber wieder einen Abschnitt aufzuweisen, in dem sich die leitenden Flächen F3, F4 zur Grundebene hin wölben. Anschaulich formuliert ist bei dem in FIG. 2 skizzierten Beispiel((A) im Querschnitt, (B) in Draufsicht) die Kuppe der bekannten Ausformung nach innen eingedrückt. Die Bauhöhe der Anordnung und somit deren Platzbedarf wird dadurch erheblich verringert. Der exakte Verlauf der Flächen F1, F2 kann nach demselben Prinzip wie bei der bekannten Bauform bestimmt werden.

Eine Weiterbildung der Erfindung sieht wie in FIG. 2 skizziert vor, daß an einem ersten Randabschnitt R1 die Flächen F3, F4 zu ihrem Rand hin zur Mitte der Anordnung hin umgelenkt sind und an den Flächenrändern dieses ersten Randabschnitts R1 ein oder bevorzugt mehrere Strahlerelemente SE angeordnet sind. Die Linse ist damit nicht mehr rotationssymmetrisch, die gesamte Anordnung in den radialen Abmessungen parallel zur Grundebene GE jedoch wesentlich kompakter durch die Anbringung der Strahlerelemente innerhalb der Berandung der Linse. Die mehreren Strahlerelemente entlang des Randabschnitts R1 ermöglichen auf vorteilhafte Weise die Abdeckung eines Überwachungsbereich durch mehrere azimutale Winkelsegmente.

Vorteilhafterweise wird auch zumindest ein Teil der Sende-Empfangs- und/oder Auswerteeinrichtungen der Radaranordnung innerhalb der Berandung der linse untergebracht, insbesondere die Hochfrequenz- Schaltungsanordnungen (Front-end-Elektronik).

Gemäß einer weiteren vorteilhaften Ausführungsform sind die Flächenränder an einem zweiten, den Strahlerelementen SE diametral abgewandten Randabschnitt R2 trichterförmig (T) auseinanderlaufend ausgeführt. Hierdurch wird eine wunschgemäße Strahlfokussierung in Elevationsrichtung ermöglicht.

Falls nur ein eingeschränkter Überwachungsbereicch in Aziumtrichtung gefordert wird, ist eine weitere Modifikation möglich: Anstelle einer kreisförmigen Projektion der Linse auf die Grundfläche wird eine elliptische Form gewählt. Die Wölbung der reflektierenden Flächen F₃, F₄, kann entsprechend angepaßt werden. Die Strahlfokussierung ist dann nur für die zentrale Lage des Speiseelements optimal. Durch diese Modifikation kann die Bautiefe der Antennenanordnung im Verhältnis zur Breite reduziert werden.

## Patentansprüche

1. Antennenanordnung, insbesondere für Kraftfahrzeugradare mit in Fahrtrichtung weisendem Überwachungsbereich,
welche zwei in geringem Abstand parallel verlaufende gekrümmte leitende Flächen (F3, F4) als strahlungsbündelndes Element und ein oder mehrere Antennenelemente SE am Rand der leitenden Flächen aufweist,
wobei die leitende Flächen (F3, F4) sich von den Flächenrändern her von einer Grundebene GE wegwölben und sich im weiteren Verlauf ein oder mehrmals zur Mitte der Flächen (F3, F4) hin wieder zu der Grundebene GE hinwölben,
**dadurch gekennzeichnet,**
**dass** die Draufsichtprojektion des durch die leitende Flächen (F3, F4) gebildeten, laufzeitbestimmenden Antennenteils elliptisch abgeflacht ist.

2. Antennenanordnung nach Anmspruch 1, **dadurch gekennzeichnet, daß** die Ränder der leitenden Flächen mit einem ersten Randabschnitt zur Mitte der Flächen hin gerichtet sind, und daß an diesem ersten Randabschnitt mehrere Antennenelemente angeordnet sind.

3. Antennenanordnung nach Anspruch 2, **dadurch gekennzeichnet, daß** Hochfrequenz-Schaltungseinrichtungen zwischen der Grundebene und den gewölbten Flächen angeordnet sind.

4. Antennenanordnung nach einem der vorhergehenden Ansprüche,
**dadurch gekennzeichnet,**
**dass** die Flächenränder der leitenden Flächen (F3, F4) an einem zweiten, den Strahlerelementen SE diametral abgewandten Randabschnitt R2 trichterförmig (T) auseinander laufend ausgeführt sind.

## Claims

1. Antenna arrangement, in particular for motor vehicle radars having a monitoring area pointing in the direction of travel, which has two curved conductive surfaces (F3, F4) which run parallel a short distance apart as a beamforming element, and has one or more antenna elements SE at the edge of the conductive surfaces,
with the conductive surfaces (F3, F4) being curved away from a base flank GE from the surface edges and being curved back again towards the base flank GE once or more in the further profile towards the centre of the surfaces (F3, F4)
**characterized**
**in that** the plan view projection of the antenna part which is formed by the conductive surfaces (F3, F4) and which governs the delay time is flattened elliptically.

2. Antenna arrangement according to Claim 1,
**characterized**
**in that** the first edge section of the edges of the conductive surfaces points towards the centre of the surfaces, and in that two or more antenna elements are arranged on this first edge section.

3. Antenna arrangement according to Claim 2,
**characterized**
**in that** the radio-frequency circuit devices are arranged between the base plane and the curved surfaces.

4. Antenna arrangement according to one of the preceding claims
**characterized**
**in that** the surface edges of the conductive surfaces (F3, F4) are designed such that they run away from one another in the form of a funnel (T) on a second edge section R2, which is diametrically opposite and faces away from the antenna elements SE.

## Revendications

1. Arrangement d'antenne, en particulier pour radars pour véhicules automobiles possédant une zone de surveillance dirigée dans le sens du déplacement, lequel présente deux surfaces conductrices courbes (F3, F4) qui s'étendent parallèlement à une faible distance l'une de l'autre et font office d'élément concentrateur de rayons et un ou plusieurs éléments d'antenne SE sur le bord des surfaces conductrices, les surfaces conductrices (F3, F4) dans la suite de leur tracé s'éloignant par courbure d'un plan de base GE à partir des bords des surfaces et se rapprochant de nouveau par courbure du plan de base GE une ou plusieurs fois en vers le centre des surfaces (F3, F4), **caractérisé en ce que** la projection vue de dessus de la partie de l'antenne formée par les surfaces conductrices (F3, F4) qui détermine le temps de propagation a la forme d'une ellipse aplatie.

2. Arrangement d'antenne selon la revendication 1, **caractérisé en ce que** les bords des surfaces conductrices sont dirigés avec une première section de bord en direction du centre des surfaces et que plusieurs éléments d'antenne sont disposés sur cette première section de bord.

3. Arrangement d'antenne selon la revendication 2, **caractérisé en ce que** des dispositifs de commutation à haute fréquence sont disposés entre le plan de base et les surfaces courbées.

4. Arrangement d'antenne selon l'une des revendications précédentes, **caractérisé en ce que** les bords des surfaces conductrices (F3, F4) sortent en s'éloignant l'un de l'autre sous la forme d'un entonnoir (T) au niveau d'une deuxième section de bord R2 diamétralement opposée aux éléments d'antenne SE.
